# NEUE EUROPÄISCHE PATENTSCHRIFT

(11) **EP 2 038 625 B2**
(45) Veröffentlichungstag und Bekanntmachung des Hinweises auf die Entscheidung über den Einspruch: **20.05.2015**
(45) Hinweis auf die Patenterteilung: 10.08.2011
(21) Anmeldenummer: 07764375.7
(22) Anmeldetag: 15.06.2007
(51) Int. Cl.: G01K 13/02

(54) **TEMPERATURMESSVORRICHTUNG**
TEMPERATURE MEASURING DEVICE
DISPOSITIF DE MESURE DE TEMPÉRATURE

(30) Priorität: 06.07.2006 DE 102006031343
(43) Veröffentlichungstag der Anmeldung: 25.03.2009
(60) Teilanmeldung: 11159819.9
(73) Patentinhaber: EPCOS AG, 81669 München (DE)
(72) Erfinder: GRUNDMANN, Wolfgang, 16547 Birkenwerder (DE); OSTRICK, Bernhard, 14513 Teltow (DE); BALZER, Peter, 10179 Berlin (DE)
(74) Vertreter: Epping - Hermann - Fischer
(86) Internationale Anmeldenummer: PCT/DE2007/001059
(87) Internationale Veröffentlichungsnummer: WO 2008/003280

(56) Entgegenhaltungen:
- DE-A1- 19 608 675
- DE-T2- 3 854 048
- JP-A- 2002 005 757
- JP-A- 2006 058 231
- JP-U- S59 184 840
- US-A- 3 167 733

## Beschreibung

Temperaturfühler sind z. B. aus der Druckschrift DE 10340636 B3 bekannt.

Die Druckschrift JP 2002 005757 A offenbart eine Temperaturmessvorrichtung, bei der ein Sensorelement in einer Ausbuchtung eines Rohres eingebettet ist, um die Temperatur eines durch das Rohr strömenden Mediums zu erfassen.

Aus der Druckschrift DE 196 08 675 A1 ist eine medienführende Vorrichtung mit Temperaturmessung im Medium bekannt, bei der eine Sensor-Baugruppe an einem seitlichen Abgang einer Rohrleitung angeordnet ist. Die Sensor-Baugruppe umfasst ein Sensorgehäuse mit einem elektrischen Temperaturfühler und zwei aus dem Sensorgehäuse herausragenden Kontaktstiften.

Die Druckschrift JP 2006 058231 A beschreibt eine Vorrichtung zur Messung der Temperatur von Flüssigkeiten oder Gasen in einem Behältnis, bei der ein Schutzschlauch, in dem ein Temperatursensor angeordnet ist, in ein Befestigungsloch des Behältnisses eingeführt ist.

Eine zu lösende Aufgabe besteht darin, eine Messvorrichtung anzugeben, die zur Erfassung der Temperatur eines in einem Leitungssystem strömenden Mediums geeignet ist.

Es wird eine Temperaturmessvorrichtung mit einem Fühlkopf und einem Rohrstück angegeben, in dem der Fühlkopf eingebettet, vorzugsweise eingegossen, ist. Das Rohrstück ist zur Durchführung eines Mediums vorgesehen, dessen Temperatur mittels des Fühlkopfs erfasst werden soll.

Der Fühlkopf ist vorzugsweise in der Wandung, d. h. im Mantel des Rohrstücks eingebettet.

Das Medium, das einer Temperaturmessung unterzogen werden soll, ist vorzugsweise ein durch das Röhrstück strömendes Medium wie z. B. Luft, Gas, Dampf oder eine Flüssigkeit. Die strömende Flüssigkeit kann z. B. Wasser, Öl, Kraftstoff, Lauge usw. umfassen.

Die Innenseite des Rohrstücks weist im Bereich des Fühlkopfs insbesondere keine abzudichtenden Schnittstellen, d. h. Grenzflächen zwischen zwei aneinander grenzenden Teilen, auf. Eine schnittstellenfreie Integration des Fühlkopfs in einem Teil eines Leitungssystems erlaubt eine nicht invasive Temperaturmessung eines durch das Leitungssystem durchströmenden Mediums. Eine solche Messung ist vorteilhaft, da dabei - im Gegensatz zu einer invasiven Temperaturmessung, bei der ein Fühlkopfs durch die Wand des Leitungssystems durchgeführt wird - keine Undichtigkeiten entstehen können.

Das Rohrstück weist vorzugsweise eine nach innen gewandte Hervorhebung auf, in der zumindest ein Teil des Fühlkopfs eingeschlossen ist. Der Fühlkopf kann aber auch in einem Bereich der Wand des Rohrstücks eingeschlossen sein, der keine nach innen ragenden Hervorhebungen aufweist.

Das Rohrstück kann stirnseitig angeordnete Rastvorrichtungen aufweisen, die insbesondere das Aufbringen von Schläuchen eines Leitungssystems ermöglichen. Beispielsweise kann das Rohrstück der angegebenen Messvorrichtung zwischen zwei Schläuchen angeordnet sein, durch die das Kühlwasser zur Kühlung eines Motors fließt.

Das Rohrstück kann auch aus einem Material mit elastischen Eigenschaften ausgebildet sein. Ein derart ausgebildetes Rohrstück kann als Dichtung zwischen zwei Rohren verwendet werden.

Das Rohrstück kann stirnseitig einen größeren Durchmesser als in den angrenzenden Bereichen, eine Abschrägung und/oder eine Rippung aufweisen.

Das Rohrstück ist vorzugsweise mit einer Steckervorrichtung monolithisch verbunden, in der elektrische Zuleitungen integriert sind, die mit dem Fühlkopf leitend verbunden sind. Durch die monolithische Verbindung des Rohrstücks und der Steckervorrichtung kann auf die Montage der Steckervorrichtung am Rohrstück mittels Haltevorrichtungen verzichtet werden.

Im Rohrstück ist vorzugsweise mindestens ein wärmeleitender Körper eingebettet, der den Fühlkopf berührt. Die Wärmeleitfähigkeit des wärmeleitenden Körpers übersteigt diejenige des Rohrstücks.

Der wärmeleitende Körper ist vorzugsweise flächig ausgebildet, um die Temperatur des durch das Rohr fließenden Mediums an verschiedenen Stellen des Rohrstücks aufzunehmen und zu mitteln. Der wärmeleitende Körper ist vorzugsweise im Rohrstück eingebettet und in der Nähe der inneren Fläche des Rohrstücks angeordnet. Es ist vorteilhaft, wenn der wärmeleitende Körper zumindest einem Teil des Rohrumfangs folgt und z. B. wie ein Ring oder Teilring ausgebildet ist. Der wärmeleitende Körper kann sich aber auch in Längsrichtung des Rohrstücks erstrecken.

Der wärmeleitende Körper umfasst vorzugsweise Metall. Er kann aber auch als ein Spritzgussteil z. B. aus einem Kunststoff ausgebildet sein, der mit Metallpartikeln gefüllt ist. Auch andere Materialien mit einer hohen thermischen Leitfähigkeit sind dafür geeignet.

Vorteilhafte Ausführungsformen und Beispiele der Messvorrichtung werden anhand von schematischen und nicht maßstabsgetreuen Figuren erläutert. Es zeigen:
Figur 1 in einer Seitenansicht eine Messvorrichtung mit einem Rohrstück, das mit einer Steckerverbindung monolithisch verbunden ist;
Figur 2 in einer perspektivischen Seitenansicht die Messvorrichtung gemäß der Figur 1;
Figur 3 in einer weiteren Ansicht ein Beispiel der Messvorrichtung gemäß den Figuren 1 und 2, die einen in eine Hervorhebung des Rohrstücks eingegossenen Fühlkopf aufweist;
Figur 4 in einer weiteren Ansicht eine erfindungsgemäße Variante der Messvorrichtung gemäß den Figuren 1 und 2, die einen in das Rohrstück eingegossenen Fühlkopf aufweist;
Figuren 5, 6 verschiedene perspektivische Ansichten des Gehäuses einer an den Fühlkopf angeschlossenen Steckerverbindung.

Die Temperaturmessvorrichtung umfasst einen Fühlkopf 1, der vorzugsweise ein NTC-Sensorelement umfasst. NTC steht für Negative Temperature Coefficient. Die Temperaturmessvorrichtung umfasst ferner ein Rohrstück 2, in dem der Fühlkopf 1 eingeschlossen ist. Der Fühlkopf 1 ist vorzugsweise im Körper des Rohrstücks derart eingegossen, dass dabei keine Schnittstellen entstehen. Insbesondere weist die Innenseite des Rohrstücks keine abzudichtenden Schnittstellen zwischen dem Rohrstück und dem Fühlelement auf.

Der Fühlkopf 1 ist mit elektrischen Zuleitungen 11 verlötet, die leitend mit den elektrischen Anschlüssen 31 der Temperaturmessvorrichtung verbunden sind. Die Zuleitungen 11 und die Anschlüsse 31 sind in einer Steckerverbindung 3 integriert, die vor dem Formen des Rohrstücks ausgeformt ist. Die Steckerverbindung 3 umfasst ein Gehäuse 30, das vorzugsweise als Formteil verfügbar ist. In diesem Gehäuse sind die Zuleitungen 11 durchgeführt. Im Gehäuse 30 sind außerdem zumindest ein Teil der Anschlüsse 31 angeordnet. Auch der Fühlkopf 1 kann in einer Variante teilweise im Gehäuse 30 angeordnet sein.

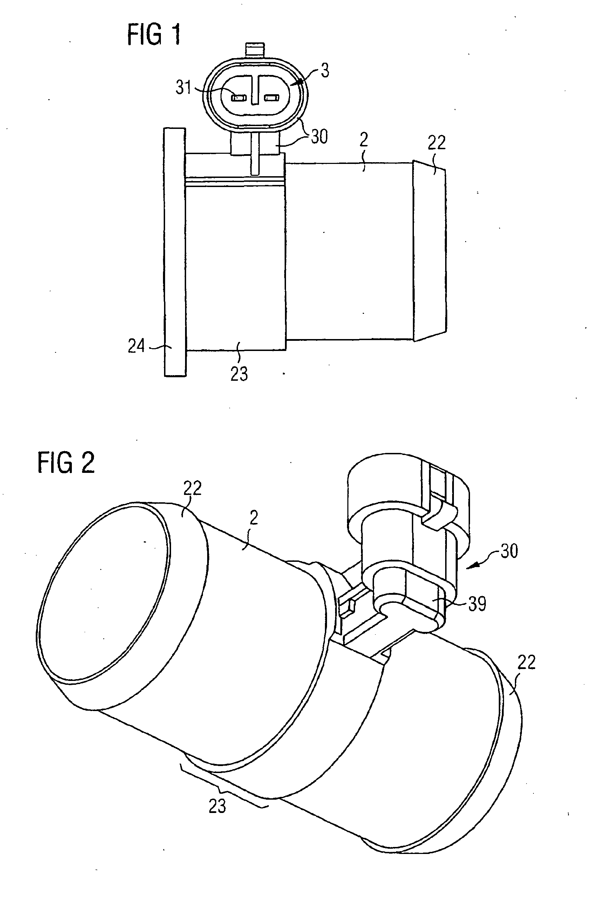

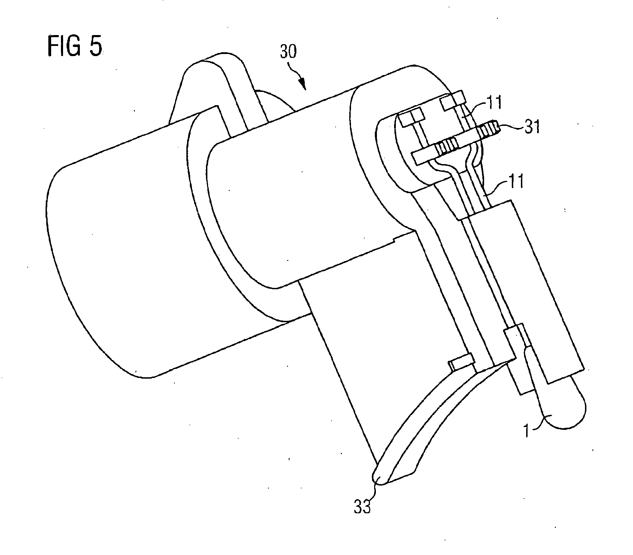

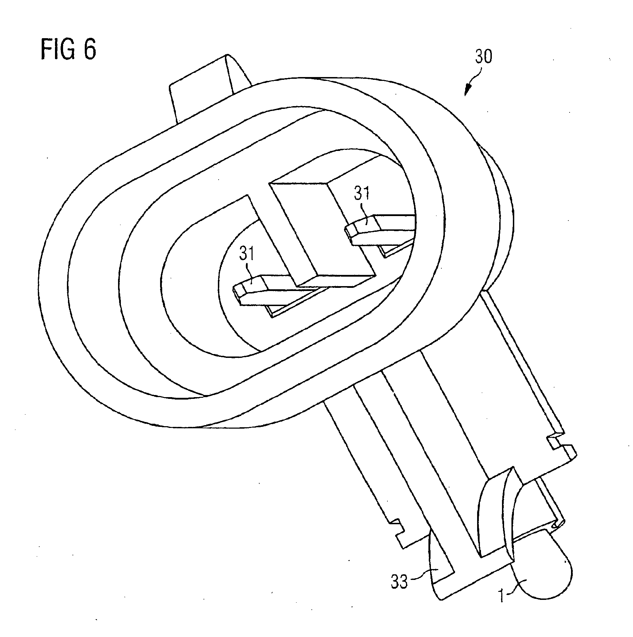

Das noch nicht in das Rohrstück 2 integrierte Gehäuse 30 ist in den Figuren 5 und 6 gezeigt. Die Zuleitungen 11 liegen frei. Der in Fig. 2 sichtbare Teil 39 des Gehäuses wird zusammen mit dem Rohrstück 2, d. h. im gleichen Verfahrensschritt erzeugt, wobei die Zuleitungen 11 in eine Gussmasse eingebettet werden. Der Teil 39 des Gehäuses 30 und das Rohrstück 2 sind in einem Stück ausgebildet.

Das Gehäuse 30 der Steckerverbindung 3 umfasst vorzugsweise einen Sockel 33, der monolithisch mit dem Rohrstück 2 verbunden ist. Der Sockel 33 weist eine Krümmung auf, die vorzugsweise einem Kreisbogen folgt, der sich aus dem Verlauf des Rohrstücks 2 ergibt.

Das Rohrstück 2 wird vorzugsweise als Formteil in einem Press- oder Spritzgussverfahren hergestellt, wobei der Sockel 33 der Steckerverbindung 3 vorzugsweise durch die Formmasse zumindest teilweise umpresst wird.

Die Steckerverbindung 3 ist an eine weitere, komplementär zu ihr ausgebildete Steckerverbindung anschließbar, die leitend mit einer Schaltung zur Auswertung der durch den Fühlkopf 1 erfassten Messsignale verbunden ist. Die Längsachse der Steckerverbindung 3 ist in den gezeigten Varianten quer zur Längsachse des Rohrstücks 2 angeordnet. Sie kann aber auch parallel oder schräg zur Längsachse des Rohrstücks 2 ausgerichtet werden.

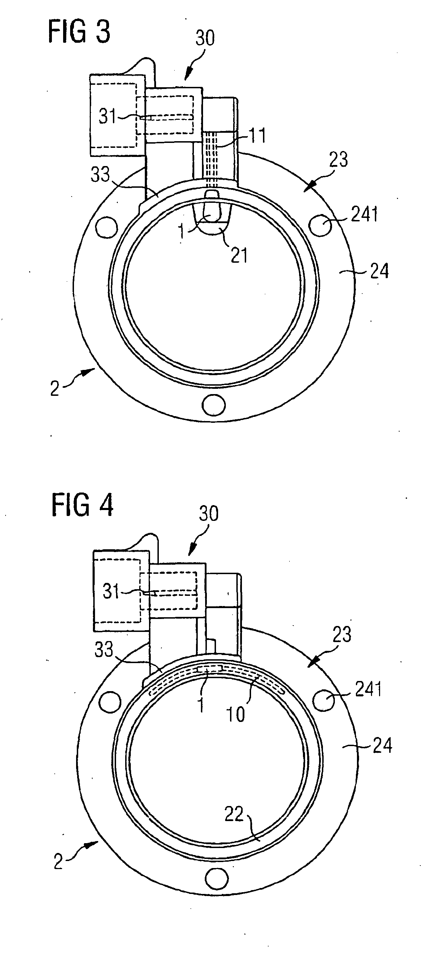

Der Fühlkopf 1 kann Beispielsweise wie in Figur 3 in einer Hervorhebung 21 des Rohrstücks 2 eingeschlossen sein, die in die Innenöffnung des Rohrstücks hineinragt, aber trotzdem ein Bestandteil des Rohrstücks ist.

Der Fühlkopf 1 ist erfindungsgemäß wie in Figur 4 in der Seitenwand des Rohrstücks 2 eingeschlossen , die im Bereich des Fühlkopfs vorzugsweise keine Hervorhebungen aufweist.

Im Rohrstück 2 kann mindestens ein gut wärmeleitender Körper 10 vorzugsweise aus Metall eingebettet sein, der den Fühlkopf 1 berührt. Unter einem gut wärmeleitenden Körper versteht man einen Körper, dessen Wärmeleitfähigkeit größer als diejenige der Umgebung (d. h. des Rohrstücks) ist.

Der wärmeleitende Körper 10 ist vorzugsweise komplett in der Wandung des Rohrstücks eingebettet. Der wärmeleitende Körper 10 ist flächig, in dieser Variante in Form eines Teilrings ausgebildet. Der wärmeleitende Körper kann auch die Form eines Topfs haben, in dem vorzugsweise ein Teil des Fühlkopfs 1 angeordnet ist.

Das Rohrstück 2 kann beidseitig an weitere Rohre angeschlossen werden und wird dann ein Bestandteil eines Leitungssystems zur Durchführung eines - vorzugsweise das Leitungssystem durchströmenden - Mediums, dessen Temperatur gemessen werden soll. Das Medium kann ein Gas oder eine Flüssigkeit umfassen.

Das Rohrstück kann als Stutzen benutzt werden, auf dessen Stirnseiten Schläuche aufgezogen werden. Stirnseitige Bereiche 22 des Rohrstücks 2 weisen vorzugsweise Rastvorrichtungen auf.

Das Rohrstücks 2, der den Fühlkopf 1 umfasst, weist im Bereich 23 eine Verdickung auf, da in diesem Bereich vorzugsweise ein Sockel der Steckerverbindung 3 eingegossen ist.

Das Rohrstück 2 kann einen Kragen 24 aufweisen, in dem Öffnungen 241 zur Aufnahme von Befestigungselementen angeordnet sind. Somit kann das Rohrstück an einem Träger befestigt werden.

### Bezugszeichenliste

- 1: Fühlkopf
- 10: wärmeleitende Körper
- 11: elektrische Zuleitungen
- 2: Rohrstück
- 21: Hervorhebung, in der der Fühlkopf 1 eingeschlossen ist
- 22: stirnseitige Bereiche des Rohrstücks 2
- 23: Bereich des Rohrstücks 2, der den Fühlkopf umfasst
- 24: Kragen
- 241: Öffnungen zur Aufnahme von Befestigungselementen
- 3: Steckerverbindung
- 30: Gehäuse der Steckerverbindung 3
- 31: elektrischer Anschluss
- 33: Sockel
- 39: Teil des Gehäuses 30

## Patentansprüche

1. Temperaturmessvorrichtung
- mit einem Fühlkopf (1), der mit elektrischen Zuleitungen (11) verlötet ist, und einem Rohrstück, in dem der Fühlkopf (1) eingebettet ist,
- wobei das Rohrstück (2) zur Durchführung eines Mediums vorgesehen ist, dessen Temperatur mittels des Fühlkopfs (1) erfassbar ist, **dadurch gekennzeichnet, dass**
- im Rohrstück (2) mindestens ein wärmeleitender Körper (10) eingebettet ist, der den Fühlkopf (1) berührt,
- die Wärmeleitfähigkeit des wärmeleitenden Körpers (10) diejenige des Rohrstücks (2) übersteigt,
- wobei eine Steckervorrichtung (3) vorgesehen ist, in der die elektrischen Zuleitungen (11) integriert sind, wobei die Steckervorrichtung (3) ein Gehäuse (30) mit einem Sockel (33) umfasst, und wobei das Rohrstück (2) ein in einem Press- oder Spritzgussverfahren hergestelltes Formteil aus einer Formmasse ist, wobei der Sockel (33) zumindest teilweise durch die Formmasse umpresst ist.

2. Temperaturmessvorrichtung nach Anspruch 1,
- wobei das Rohrstück (2) eine nach innen gewandte Hervorhebung (21) aufweist, in der zumindest ein Teil des Fühlkopfs (1) eingeschlossen ist.

3. Temperaturmessvorrichtung nach Anspruch 1 oder 2,
- wobei die Innenseite des Rohrstücks (2) im Bereich des Fühlkopfs (1) schnittstellenfrei ist.

4. Temperaturmessvorrichtung nach einem der Ansprüche 1 bis 3,
- wobei das Rohrstück (2) stirnseitig Rastvorrichtungen aufweist.

5. Temperaturmessvorrichtung nach einem der Ansprüche 1 bis 4,
- wobei das Rohrstück (2) in einem unlaufenden Bereich (23), der den Fühlkopf (1) umfasst, einen größeren Durchmesser als in den angrenzenden Bereichen aufweist.

6. Temperaturmessvorrichtung nach einem der Ansprüche 1 bis 5,
- wobei das Rohrstück (2) als Grundmaterial ein Material mit elastischen Eigenschaften umfasst.

7. Temperaturmessvorrichtung nach einem der Ansprüche 1 bis 5,
- wobei das Rohrstück (2) ein Spritzgussteil ist.

8. Temperaturmessvorrichtung nach einem der Ansprüche 1 bis 7,
- wobei der Fühlkopf (1) ein NTC-Element umfasst.

9. Temperaturmessvorrichtung nach Anspruch 1,
- wobei der wärmeleitende Körper flächig ausgebildet ist.

## Claims

1. Temperature measuring apparatus
- having a sensing head (1) which is soldered to electrical feed lines (11), and a pipe piece in which the sensing head (1) is embedded,
- with the pipe piece (2) being provided for carrying a medium of which the temperature can be detected by means of the sensing head (1), **characterized in that**
- at least one thermally conductive body (10) which touches the sensing head (1) is embedded in the pipe piece (2),
- the thermal conductivity of the thermally conductive body (10) exceeds that of the pipe piece (2),
- with a plug apparatus (3) in which the electrical feed lines (11) are integrated being provided, with the plug apparatus (3) comprising a housing (30) having a base (33), and with the pipe piece (2) being a moulded part which is produced in a compression-moulding or injection-moulding process from a moulding compound, with the base (33) being at least partially encapsulated by the moulding compound.

2. Temperature measuring apparatus according to Claim 1,
- with the pipe piece (2) having an inwardly facing protrusion (21) in which at least a portion of the sensing head (1) is enclosed.

3. Temperature measuring apparatus according to Claim 1 or 2,
- with the inner face of the pipe piece (2) not having an interface in the region of the sensing head (1).

4. Temperature measuring apparatus according to one of Claims 1 to 3,
- with the pipe piece (2) having latching apparatuses at the end.

5. Temperature measuring apparatus according to one of Claims 1 to 4,
- with the pipe piece (2) having a larger diameter in a circumferential region (23), which comprises the sensing head (1), than in the adjoining regions.

6. Temperature measuring apparatus according to one of Claims 1 to 5,
- with the pipe piece (2) comprising a material with elastic properties as base material.

7. Temperature measuring apparatus according to one of Claims 1 to 5,
- with the pipe piece (2) being an injection-moulded part.

8. Temperature measuring apparatus according to one of Claims 1 to 7,
- with the sensing head (1) comprising an NTC element.

9. Temperature measuring apparatus according to Claim 1,
- with the thermally conductive body being flat.

## Revendications

1. Dispositif de mesure de température présentant :
une tête sensible (1) sur laquelle sont brasés des conducteurs électriques (11) et une pièce tubulaire dans laquelle la tête sensible (1) est incorporée,
la pièce tubulaire (2) étant prévue pour le passage d'un fluide dont la température peut être détectée au moyen de la tête sensible (1),
**caractérisé en ce que**
au moins un corps (10) conducteur de chaleur, en contact avec la tête sensible (1), est incorporé dans la pièce tubulaire (2),
la conductivité thermique du corps (10) conducteur de chaleur étant supérieure à celle de la pièce tubulaire (2),
un dispositif d'enfichage (3) étant prévu, dans lequel sont intégrés les conducteurs électriques (11), le dispositif d'enfichage (3) comportant un boîtier (30) pourvu d'un socle (33), et la pièce tubulaire (2) étant une pièce moulée fabriquée à l'aide d'un procédé de moulage sous pression ou de moulage par injection à partir d'une matière à mouler, le socle (33) étant au moins partiellement enrobé par moulage par la matière à mouler.

2. Dispositif de mesure de température selon la revendication 1, dans lequel la pièce tubulaire (2) présente une saillie (21) orientée vers l'intérieur et dans laquelle au moins une partie de la tête sensible (1) est enfermée.

3. Dispositif de mesure de température selon les revendications 1 ou 2, dans lequel le côté intérieur de la pièce tubulaire (2) ne présente pas d'interface au niveau de la tête sensible (1).

4. Dispositif de mesure de température selon l'une des revendications 1 à 3, dans lequel la pièce tubulaire (2) présente sur son côté frontal des dispositifs d'encliquetage.

5. Dispositif de mesure de température selon l'une des revendications 1 à 4, dans lequel la pièce tubulaire (2) présente dans une partie périphérique (23) qui inclut la tête sensible (1) un diamètre plus grand que dans les parties adjacentes.

6. Dispositif de mesure de température selon l'une des revendications 1 à 5, dans lequel la pièce tubulaire (2) comporte comme matériau de base un matériau à propriétés élastiques.

7. Dispositif de mesure de température selon l'une des revendications 1 à 5, dans lequel la pièce tubulaire (2) est une pièce moulée par injection.

8. Dispositif de mesure de température selon l'une des revendications 1 à 7, dans lequel la tête sensible (1) comprend un élément NTC.

9. Dispositif de mesure de température selon la revendication 1, dans lequel le corps conducteur de chaleur a une configuration aplatie.
